# EUROPÄISCHE PATENTSCHRIFT

(11) **EP 0 762 150 B1**
(45) Veröffentlichungstag und Bekanntmachung des Hinweises auf die Patenterteilung: **30.01.2002**
(21) Anmeldenummer: 96114564.6
(22) Anmeldetag: 11.09.1996
(51) Int. Cl.: G02B 1/04, C08G 69/26, C08L 77/00, C08L 77/06, C08G 69/36, G02B 5/02

(54) **Streuscheibe für Beleuchtungssysteme**
Diffusing plate for lighting system
Diffuseur pour système d'éclairage

(30) Priorität: 12.09.1995 DE 29514658 U
(43) Veröffentlichungstag der Anmeldung: 12.03.1997
(73) Patentinhaber: EMS-INVENTA AG, 8002 Zürich (CH)
(72) Erfinder: Laederach, Susanne, Dipl.-Ing. HTL, 7013 Domat/Ems (CH); Dalla Torre, Hans, Dr. phil., 7013 Domat/Ems (CH)
(74) Vertreter: Becker Kurig Straus

(56) Entgegenhaltungen:
- EP-A- 0 042 820
- FR-A- 2 606 416

## Beschreibung

Die Erfindung betrifft den in den Patentansprüchen angegebenen Gegenstand.

Die Erfindung betrifft insbesondere eine neuartige Streuscheibe aus neuartigem Material für Beleuchtungssysteme, wie sie beispielsweise Automobilscheinwerfer darstellen, die eine besonders gute Stabilität gegenüber den anwendungsbedingten Umwelteinflüssen aufweist.

Die erfindungsgemäße Streuscheibe findet Verwendung im gesamten Einsatzbereich für Beleuchtungssysteme von Verkehrsmitteln, wie Fahrzeugen aller Art, in Beleuchtungssystemen zur Verkehrssicherung, wie Signalanlagen für den Straßen-, den Flug- und den Schiffsverkehr und in optischen Geräten.

Bevorzugte Anwendungen sind (Front-)Scheinwerfer, Nebelleuchten, Blinkleuchten und Signalleuchten.

Materialien für thermoplastische Streuscheiben sind beispielsweise bekannt aus den Dokumenten JP06322093-A, JP07053430-A, US5409975-A, JP06172508-A, JP06145317-A, US5319149-A, US5306832-A, JP06263863-A, JP06239781-A, JP05331277-A, JP05194719-A, JP05078567-A, JP05078467-A, WO9211319-A1, JP04214751-A und JP02070712-A.

In diesen Dokumenten werden aromatische Copolymer-Polycarbonate beschrieben, die sich aufgrund ihrer hohen Glasübergangstemperatur, ihrer guten Transparenz und ihrer leichten Verarbeitbarkeit für Streuscheiben eignen. Der Nachteil solcher Polycarbonate liegt in der ungenügenden UV-Beständigkeit und in zu geringer Kratzfestigkeit und Oberflächenhärte. Streuscheiben aus Polycarbonaten können deshalb ohne spezielle Schutzschichten nicht praktisch genutzt werden.

Solche Schutzschichten und ihre Aufbringung auf ein Polycarbonat-Substrat sind ebenfalls bekannt, beispielsweise aus den Dokumenten EP-588508-A1, JP07108560-A, DE69200870-E, US5008148-A, JP60250925-A, JP06206231-A, DE4238279-A1, JP05093170-A und JP93069845-B.

Einen anschaulichen Eindruck vom neuesten Stand der Technik betreffend Kraftfahrzeug-Scheinwerferstreuscheiben erhält man durch einen Artikel, publiziert in der K Plastic & Kautschuk Zeitung Nr. 17 vom 25.August 1995, Seite 13, Giesel Verlag Isernhagen/Hannover. Wie daraus ersichtlich ist, werden für die Beschichtung von Polycarbonat-Streuscheiben große Investitionen in aufwendige Produktionsanlagen getätigt.

Ein wesentlicher Nachteil der beschriebenen Schutzschichten oder "Hardcoats" ist, daß sie das Endprodukt verteuern und relativ große Ausschußmengen beim Hinterspritzen von Schutzfolien oder beim Beschichten mit Hardcoats entstehen. Das Beschichten eignet sich nur für relativ plane und einfache Teile, so daß z.B. Blinkleuchten nicht ohne besondere Vorkehrungen in eine Scheinwerferkonstruktion für Automobile integriert werden können.

Eine besondere Gefahr liegt in der Rißbildung der Schutzschicht im Gebrauch, so daß sich die Schicht partiell vom Substrat ablösen kann. Dieser Effekt läßt die Streuscheibe schmutzig und trüb erscheinen und ermöglicht das Eindringen von chemischen Substanzen, z.B. Streusalz, zwischen Schutzschicht und Substrat, welches ein Erblinden der Streuscheibe zur Folge hat.

Kratzfestbeschichtungen nach dem Stand der Technik überdecken auch die Kanten der Formteile nur ungenügend. Das ist eine zusätzliche Quelle für die obengenannten Folgeschäden.

Der Erfindung liegt daher die Aufgabe zugrunde, eine Streuscheibe für Beleuchtungssysteme zu entwickeln, für die das Beschichten des Substrats entfällt und die die obengenannten Nachteile des Standes der Technik überwindet.

Diese Aufgabe wird durch die unbeschichtete Streuscheibe gemäß Anspruch 1 sowie durch das Beleuchtungssystem gemäß Anspruch 11 gelöst.

In den Unteransprüchen sind vorteilhafte Ausführungsformen der Erfindung enthalten.

Die Aufgabe wird insbesondere gelöst durch den Einsatz der erfindungsgemäßen Copolyamide oder ihrer Blends oder Legierungen mit Homopolyamiden als neue Materialien.

Die erfindungsgemäßen Streuscheiben zeichnen sich in vorteilhafter Weise gegenüber dem Stand der Technik durch besondere Kratzfestigkeit und Oberflächenhärte aus, so daß eine Hardcoat-Beschichtung überflüssig wird. Ein weiterer Vorteil sind die hohe Transparenz und die besonders gute UV-Beständigkeit.

Die Glasumwandlungstemperaturen (Tg) der erfindungsgemäß verwendeten Copolyamide von mindestens über 170°C, bevorzugt von 170 bis 230°C, garantieren hohe Wärmeformbeständigkeiten. Blends oder Legierungen dieser Copolyamide mit bis zu 30 Gew.-% aliphatischer Homopolyamide aus der Gruppe PA6, PA11, PA12, PA66, PA69, PA610 und PA612 weisen verbesserte Chemikalien- und Spannungsriß-Beständigkeiten auf, ohne dabei an Steifheit, Festigkeit oder Wärmeformbeständigkeit zu verlieren.

Besonders bevorzugt ist ein Zusatz von 10 Gew.-% Polyamid 12 zum Blend. Es werden dabei bekannte Katalysatoren und Stabilisatoren eingesetzt.

Die Copolyamide und ihre Blends können wahlweise mit verarbeitungs- oder verwendungsbedingten Zusatzstoffen aus der Gruppe Kettenregler, Katalysatoren, Gleitmittel, Stabilisatoren, Pigmente, Farbstoffe und Schlagzähigkeitsverbesserer in bekannter Weise und mit bekannten Mengen modifiziert sein.

Tabelle 1 zeigt die Eigenschaften der erfindungsgemäßen Streuscheibe.
Beispiel für ein erfindungsgemäßes Polyamid ist folgende Zusammensetzung: 40
Mol-% cycloaliphatisches Diamin: Bis(3-methyl-4-aminocyclohexyl)-methan in Form von Laromin C260® ,
40 Mol-% aromatische Dicarbonsäure: Isophthalsäure,
20 Mol-% Laurinlactam und (nach der Polymerisation)
10 Gew.-% Polyamid 12.

Es wurden bekannte Katalysatoren und Stabilisatoren eingesetzt.

Die erfindungsgemäße Streuscheibe ist nach dem Spritzgußverfahren einfach und kostensparend herstellbar.

**Tabelle 1**

| Eigenschaft | Einheit | Erfindung |
|---|---|---|
| Glasumwandlungstemperatur | [°C] | 175 |
| HDT*/A [1,82 N/mm²] | [°C] | 139 |
| HDT*/B [0,46 N/mm²] | [°C] | 154 |
| Kratzfestigkeit nach Taber DIN 53754 | [mg] | |
| Oberflächenhärte (Erichsen) | [g] | > 700 |
| Chemische Beständigkeit | [-] | |
| - Benzin | | beständig |
| - Frostschutz | | bedingt beständig |
| - Wischwasser | | beständig |
| - Motorenöl | | beständig |
| Schlagzähigkeit bei 23°C | [kJ/m²] | 45,0 |
| Kerbschlagzähigkeit bei 23°C | [kJ/m²] | 2,0 |

| | | |
|---|---|---|
| * HDT = Heat Distortion Temperature | | |

## Patentansprüche

1. Unbeschichtete Streuscheibe für Beleuchtungssysteme aus farblosen, transparenten Copolyamiden oder deren Blends mit Homopolyamiden, **dadurch gekennzeichnet, daß** die Copolyamide im wesentlichen aufgebaut sind aus
a) mindestens einem cycloaliphatischen Diamin mit 6 bis 24 C-Atomen in nahezu äquimolarem Verhältnis mit
b) mindestens einer aromatischen Dicarbonsäure mit 8 bis 16 C-Atomen und
c) bis zu 20 Mol-% weiterer polyamidbildender Monomere, insbesondere 1 bis 20 Mol-% mindestens eines Lactams oder einer Omega-Aminocarbonsäure oder der nahezu äquimolaren Mischung mindestens eines aliphatischen Diamins und einer aliphatischen Dicarbonsäure, welche 6 bis 12 C-Atome aufweisen,
die Copolyamide Glasumwandlungstemperaturen von mindestens 170°C aufweisen und ggf. verarbeitungsbedingte und/oder verwendungsbedingte Zusatzstoffe enthalten.

2. Streuscheibe gemäß Anspruch 1, **dadurch gekennzeichnet, daß** die Copolyamide Glasumwandlungstemperaturen von 170 bis 230°C aufweisen.

3. Streuscheibe gemäß Anspruch 1 oder 2, **dadurch gekennzeichnet, daß** die Homopolyamide ausgewählt sind aus der Gruppe aus PA6, PA11, PA12, PA66, PA69, PA610 und PA612 und insbesondere bis zu 30 Gew.-% im Blend enthalten sind, wobei 10 Gew.-% PA12 besonders bevorzugt sind.

4. Streuscheibe gemäß Anspruch 1, **dadurch gekennzeichnet, daß** das cycloaliphatische Diamin an den Ringen und/oder an der mittelständigen Methylengruppe ein- oder mehrfach durch Methyl-, Ethyl- oder Isopropylgruppen substituiert ist.

5. Streuscheibe gemäß Anspruch 4, **dadurch gekennzeichnet, daß** das substituierte cycloaliphatische Diamin ein Bis(3-methyl-4-aminocyclohexyl)-methan ist.

6. Streuscheibe gemäß Anspruch 1, **dadurch gekennzeichnet, daß** die aromatische Dicarbonsäure ausgewählt ist aus der Gruppe aus Isophthalsäure, Terephthalsäure oder Naphthalindicarbonsäure, wobei Isophthalsäure besonders bevorzugt ist.

7. Streuscheibe gemäß Anspruch 1, **dadurch gekennzeichnet, daß** das Lactam Decanolactam oder Dodecanolactam ist.

8. Streuscheibe nach einem der vorhergehenden Ansprüche 1 bis 7, **dadurch gekennzeichnet, daß** die Zusatzstoffe ausgewählt sind aus der Gruppe Kettenregler, Stabilisatoren, Katalysatoren, Gleitmittel, Pigmente, Farbstoffe und Schlagzähigkeitsverbesserer.

9. Streuscheibe gemäß einem der vorhergehenden Ansprüche 1 bis 8, **dadurch gekennzeichnet, daß** das Copolyamid aufgebaut ist aus etwa 40 Mol-% Bis(3-methyl-4-aminocyclohexyl)-methan, etwa 40 Mol-% Isophthalsäure, etwa 20 Mol-% Laurinlactam und im Streuscheibenformkörper 10 Gew.-% Polyamid 12 enthalten sind.

10. Streuscheibe nach einem der vorhergehenden Ansprüche 1 bis 9, herstellbar nach dem Spritzgußverfahren.

11. Beleuchtungssystem, insbesondere für Land-, Luft- und Wasserfahrzeuge, **dadurch gekennzeichnet, daß** es eine Streuscheibe nach einem der Ansprüche 1 bis 10 enthält.

12. Beleuchtungssystem gemäß Anspruch 10 und 11, **dadurch gekennzeichnet, daß** es ein Nebelscheinwerfer ist.

13. Beleuchtungssystem gemäß Anspruch 10 und 11, **dadurch gekennzeichnet, daß** es ein Frontscheinwerfer ist.

## Claims

1. Uncoated lens comprising colourless, transparent copolyamides or their blends with homopolyamides, **characterized in that** the copolyamides are essentially polymerized from
a) at least one cycloaliphatic diamine of 6 to 24 carbon atoms, in a substantially equimolar ratio with
b) at least one aromatic dicarboxylic acid of 8 to 16 carbon atoms, and
c) up to 20 mol% of further polyamide-forming monomers, especially 1 to 20 mol% of at least one lactam or of an omega-aminocarboxylic acid or the substantially equimolar mixture of at least one aliphatic diamine and at least one aliphatic dicarboxylic acid which each have 6 to 12 carbon atoms,
the copolyamides have glass transition temperatures of at least 170°C and optionally contain processing-contingent and/or use-contingent additives.

2. Lens according to Claim 1, **characterized in that** the copolyamides have glass transition temperatures of 170 to 230°C.

3. Lens according to Claim 1 or 2, **characterized in that** the homopolyamides are selected from the group consisting of PA6, PA11, PA12, PA66, PA69, PA610 and PA612 and are present in the blend in a fraction of up to 30% by weight in particular, a fraction of 10% by weight of PA12 being particularly preferred.

4. Lens according to Claim 1, **characterized in that** the cycloaliphatic diamine is substituted on the rings and/or on the middle methylene group by one or more substituents selected from the group consisting of methyl, ethyl and isopropyl.

5. Lens according to Claim 4, **characterized in that** the substituted cycloaliphatic diamine is a bis(3-methyl-4-aminocyclohexyl)methane.

6. Lens according to Claim 1, **characterized in that** the aromatic dicarboxylic acid is selected from the group consisting of isophthalic acid, terephthalic acid and naphthalenedicarboxylic acid, particular preference being given to isophthalic acid.

7. Lens according to Claim 1, **characterized in that** the lactam is decanolactam or dodecanolactam.

8. Lens according to any of the preceding Claims 1 to 7, **characterized in that** the additives are selected from the group consisting of chain regulators, stabilizers, catalysts, lubricants, pigments, dyes and impact toughness improvers.

9. Lens according to any of the preceding Claims 1 to 8, **characterized in that** the copolyamide is polymerized from about 40 mol% of bis(3-methyl-4-aminocyclohexyl)methane, about 40 mol% of isophthalic acid, and about 20 mol% of laurolactam and the lens moulding contains 10% by weight of polyamide 12.

10. Lens according to any of the preceding Claims 1 to 9, obtainable by the injection moulding process.

11. Lighting system, especially for land-, air- and watercraft, **characterized in that** it contains a lens according to any of Claims 1 to 10.

12. Lighting system according to Claim 10 or 11, **characterized in that** it is a fog light.

13. Lighting system according to Claim 10 or 11, **characterized in that** it is a front headlight.

## Revendications

1. Diffuseur non revêtu pour des systèmes d'éclairage, constitué en copolyamides incolores transparents ou en leurs mélanges avec des homopolyamides, **caractérisé en ce que** les copolyamides sont constitués essentiellement par
a) au moins une diamine cycloaliphatique avec 6 à 24 atomes de C dans un rapport approximativement équimolaire, avec
b) au moins un acide bicarboné avec 8 à 16 atomes de C, et
c) jusqu'à 20 moles % d'autres monomères formant des polyamides, en particulier 1 à 20 moles % d'au moins un lactame ou d'un acide oméga-aminocarboné ou du mélange approximativement équimolaire d'au moins une diamine aliphatique et d'un acide bicarboné aliphatique, qui présentent 6 à 12 atomes de C,
et **en ce que** les copolyamides présentent des températures de transition vitreuse d'au moins 170° C et comprennent le cas échéant des additifs dus au traitement et/ou à l'utilisation.

2. Diffuseur selon la revendication 1, **caractérisé en ce que** les copolyamides présentent des températures de transition vitreuse de 170 à 230 °C.

3. Diffuseur selon l'une ou l'autre des revendications 1 et 2, **caractérisé en ce que** les homopolyamides sont choisis parmi le groupe comprenant PA6, PA11, PA12, PA66, PA69, PA610 et PA612 et sont contenus en particulier jusqu'à 30 % en poids dans le mélange, 10 % en poids de PA12 étant particulièrement préférés.

4. Diffuseur selon la revendication 1, **caractérisé en ce que** la diamine cycloaliphatique est substituée, au niveau des composés cycliques et/ou au niveau du groupe méthylène central, une ou plusieurs fois par des groupes méthyle, éthyle ou isopropyle.

5. Diffuseur selon la revendication 4, **caractérisé en ce que** la diamine cycloaliphatique substituée est un bis(3-méthyle-4-aminocyclohexyle)-méthane.

6. Diffuseur selon la revendication 1, **caractérisé en ce que** l'acide bicarboné aromatique est choisi parmi le groupe comprenant acide isophtalique, acide téréphtalique ou acide naphtalique-bicarboné, l'acide isophtalique étant particulièrement préféré.

7. Diffuseur selon la revendication 1, **caractérisé en ce que** le lactame est un décanolactame ou un dodécanolactame.

8. Diffuseur selon l'une quelconque des revendications 1 à 7, **caractérisé en ce que** les additifs sont choisis parmi le groupe comprenant les régleurs de chaîne, stabilisateurs, catalyseurs, lubrifiants, pigments, colorants et agents améliorant la résilience.

9. Diffuseur selon l'une quelconque des revendications 1 à 8, **caractérisé en ce que** le copolyamide est constitué en environ 40 moles % de bis(3-méthyle-4-aminocyclohéxyle)-méthane, environ 40 moles % d'acide isophtalique, environ 20 moles % de lactame laurique, et **en ce que** dans le corps du diffuseur sont contenus 10 % en poids de polyamide 12.

10. Diffuseur selon l'une quelconque des revendications 1 à 9, susceptible d'être fabriqué par un procédé de coulée-injection.

11. Système d'éclairage, en particulier pour des véhicules terrestres, aériens et marins, **caractérisé en ce qu'**il comprend un diffuseur selon l'une quelconque des revendications 1 à 10.

12. Système d'éclairage selon les revendications 10 et 11, **caractérisé en ce qu'**il est un phare antibrouillard.

13. Système d'éclairage selon les revendications 10 et 11, **caractérisé en ce qu'**il est un phare avant.
